# FASCICULE DE BREVET EUROPEEN

(11) **EP 3 228 438 B1**
(45) Date de publication et mention de la délivrance du brevet: **12.12.2018**
(21) Numéro de dépôt: 17305360.4
(22) Date de dépôt: 29.03.2017
(51) Int. Cl.: B29C 49/42, B29C 49/06, B29C 49/64, B29K 67/00, B29L 31/00

(54) **DISPOSITIF DE PREHENSION DE CORPS CREUX PRESENTANT UNE CAPACITE ACCRUE D'EVACUATION DE LA CHALEUR**
GREIFVORRICHTUNG FÜR HOHLKÖRPER, DIE EINE VERBESSERTE FÄHIGKEIT ZUR WÄRMEABFUHR AUFWEIST
DEVICE FOR GRIPPING A HOLLOW BODY WITH INCREASED HEAT-DISCHARGE CAPACITY

(30) Priorité: 05.04.2016 FR 1652949
(43) Date de publication de la demande: 11.10.2017
(73) Titulaire: Sidel Participations, 76930 Octeville-sur-Mer (FR)
(72) Inventeur: MORIN, Stéphane, 76930 Octeville-sur-mer (FR); GUISE, Bertrand, 76930 Octeville-sur-mer (FR); DOUDEMENT, Christophe, 76930 Octeville-sur-mer (FR); HEUZEBROC, Pierre, 76930 Octeville-sur-mer (FR)
(74) Mandataire: Grassin d'Alphonse, Emmanuel Jean Marie

(56) Documents cités:
- WO-A1-2013/034309
- DE-A1-102007 037 400
- FR-A1- 3 011 498
- US-B2- 7 008 215

## Description

L'invention a trait au convoyage des corps creux, notamment des préformes en matière plastique (par ex. en polytéréphtalate d'éthylène ou PET) dans une ligne de fabrication de récipients.

Un récipient en matière plastique est classiquement formé par soufflage ou étirage soufflage à partir d'une préforme comprenant un corps sensiblement cylindrique fermé par un fond hémisphérique et, à l'opposé, un col ouvert, séparé du corps par une collerette et présentant sa forme finale.

Pour permettre le formage du récipient, on soumet le corps et le fond de la préforme à une chauffe pour les ramollir en les amenant à une température (dite température de chauffe) supérieure à la température de transition vitreuse de la matière. Dans le cas du PET, qui possède une température de transition vitreuse de 80°C environ, la température de chauffe est généralement de 120°C environ.

La chauffe de la préforme est ordinairement réalisée dans un four équipé de sources de rayonnement infrarouge (généralement des lampes halogène). La préforme est montée sur un support tournant appelé « tournette », pourvu à une extrémité d'un mandrin emmanché dans le col, et, à une autre extrémité, d'un pignon engrenant une crémaillère. La tournette fait défiler la préforme devant les lampes, tout en l'entraînant en rotation pour exposer la totalité du corps au rayonnement.

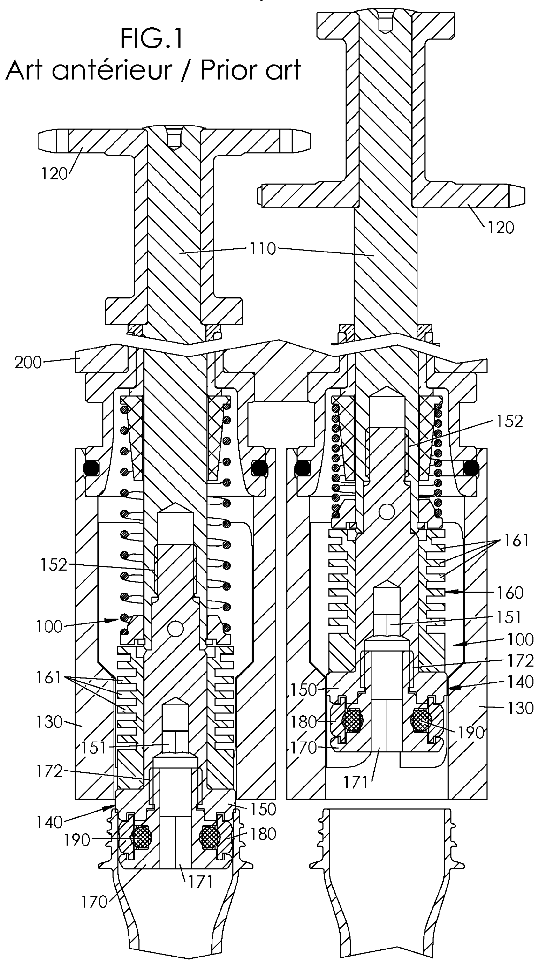

La vue en coupe de la figure 1 illustre l'architecture d'une tournette **100** connue, qui équipe des lignes de production en fonctionnement.

Cette tournette **100,** montée (par paire) sur un maillon **200** d'une chaîne de transport, comprend :
- un arbre **110** en acier, monté en rotation par rapport au maillon **200** et à une extrémité supérieure duquel est fixé un pignon **120**,
- un éjecteur **130** fixe par rapport au maillon **200**, et
- un mandrin **140** solidaire de l'arbre **110**.

Le mandrin 1**40** inclut :
- une entretoise **150** en acier vissée dans une extrémité inférieure de l'arbre **110**,
- un radiateur **160** en aluminium emmanché sur l'entretoise **150**,
- un embout **170** fixé par vissage à l'entretoise **150**, laquelle se trouve intercalée entre le radiateur **160** et l'embout **170**,
- une bague **180** expansible radialement, montée entre l'embout **170** et l'entretoise **150**, et
- un joint **190** élastique forçant l'expansion radiale de la bague **180**.

Comme on le voit sur la figure 1, une première empreinte **151** est formée dans l'entretoise **150** pour accueillir un outil tel qu'un tournevis ou une clé à six pans permettant d'assurer le vissage de l'entretoise **150** dans une section **152** filetée de l'arbre **110**. Une deuxième empreinte **171** est, par ailleurs, formée dans l'embout **170** pour accueillir un outil (en l'espèce une clé à six pans) permettant d'assurer le vissage de l'embout **170** dans une section **172** filetée de l'entretoise **150**. Comme on le voit également sur la figure 1, les deux empreintes **151**, **171** sont coaxiales, et la deuxième empreinte **171** est de taille supérieure à la première empreinte **151** pour permettre le libre passage de l'outil correspondant à celle-ci.

Une tournette à l'architecture voisine est présentée dans le brevet américain US 7 008 215 (Graham Packaging). Une seconde tournette est décrite dans le document WO2013/034309A1.

La fonction du radiateur **160**, pourvu d'une série d'ailettes **161**, est de limiter l'échauffement du mandrin (et donc du col de la préforme emmanchée dessus), par échange thermique avec l'air ambiant. Sans cela, l'accumulation de calories au niveau du mandrin aurait des conséquences néfastes sur la ligne de production. D'abord, une dilatation trop importante de l'embout (sous l'effet de la chaleur) est susceptible de provoquer son coincement dans le col de la préforme. Ensuite, compte tenu de l'inertie thermique des métaux, l'embout, l'entretoise et la bague expansible, tous trois en contact avec le col de la préforme, sont susceptibles de déformer celui-ci en lui transférant une partie de leurs calories.

Pour éviter ce phénomène, il a été déterminé que la température du mandrin ne doit pas dépasser la température limite de 60°C. Or il a été constaté que, pour une température de chauffe de 120°C, cette température limite est parfois dépassée, et que les conséquences précitées se produisent.

Un objectif est d'assurer une meilleure régulation thermique des tournettes.

Un deuxième objectif est, à cet effet, d'assurer une meilleure évacuation des calories accumulées par le mandrin lors de la chauffe de la préforme.

A cet effet, il est proposé, en premier lieu, un dispositif de préhension de corps creux, qui comprend :
- un arbre libre en rotation ;
- un mandrin solidaire de l'arbre, ce mandrin comprenant :
   ∘ un embout,
   ∘ un radiateur monté directement sur l'embout,
   ∘ une entretoise intercalée entre l'embout et le radiateur,
   ∘ une bague expansible montée entre l'embout et l'entretoise,
   ∘ un organe élastique monté entre l'embout et la bague expansible,
   ∘ un insert réalisé dans un matériau à conductivité thermique élevée, enchâssé dans un logement ménagé dans l'embout et débouchant sur une face d'extrémité libre de celui-ci, l'insert s'étendant jusqu'au droit du radiateur.

L'insert fait fonction de caloduc, et assure un transport efficace des calories depuis le col de la préforme vers le radiateur, qui en assure la dissipation. Il en résulte une température de fonctionnement réduite, au bénéfice de la fiabilité du dispositif de préhension.

Diverses caractéristiques supplémentaires peuvent être prévues, seules ou en combinaison :
- l'insert est en aluminium ;
- l'insert est cylindrique, et le logement se présente sous forme d'un alésage ;
- l'insert est monté serré dans le logement ;
- le radiateur présente une section taraudée par laquelle il est vissé sur une section filetée correspondante de l'embout ;
- le radiateur présente une section cylindrique lisse, par laquelle il est emmanché sur une section cylindrique lisse correspondante de l'embout ;
- l'insert présente un diamètre externe supérieur ou égal à 50% du diamètre externe de la section cylindrique lisse de l'embout ;
- le diamètre externe de l'insert est d'environ 60% du diamètre externe de la section cylindrique lisse de l'embout ;
- l'embout présente une section d'extrémité filetée par laquelle il est vissé dans une section taraudée correspondante de l'arbre.

Il est proposé, en deuxième lieu, une unité de chauffe de corps creux, qui comprend une pluralité de dispositifs de préhension tel que présenté ci-dessus.

D'autres objets et avantages de l'invention apparaîtront à la lumière de la description d'un mode de réalisation, faite ci-après en référence aux dessins annexés dans lesquels :
- la figure 1 est une vue en coupe montrant une paire de tournettes d'architecture connue de l'art antérieur ;
- la figure 2 est une vue en coupe montrant une paire de tournettes selon un premier mode de réalisation, montrées l'une (à gauche) en position de vêtissage, l'autre (à droite) en position de dévêtissage ;
- la figure 3 est une vue de détail d'une tournette selon l'encart III de la figure 2, avec, en médaillon, un détail à échelle agrandie ;
- la figure 4 est une vue en perspective de dessus montrant l'éjecteur et le mandrin d'une tournette selon le premier mode de réalisation, avec une préforme ;
- la figure 5 est une vue en perspective de dessous montrant l'éjecteur et le mandrin de la figure 4 ;
- la figure 6 est une vue en coupe montrant une paire de tournettes selon un deuxième mode de réalisation, montrées l'une (à gauche) en position de vêtissage, l'autre (à droite) en position de dévêtissage ;
- la figure 7 est une vue de détail d'une tournette, selon l'encart VII de la figure 6 ;
- la figure 8 est une vue en perspective de dessus montrant l'éjecteur et le mandrin d'une tournette selon le deuxième mode de réalisation, avec une préforme ;
- la figure 9 est une vue en perspective de dessous montrant l'éjecteur et le mandrin de la figure 8.

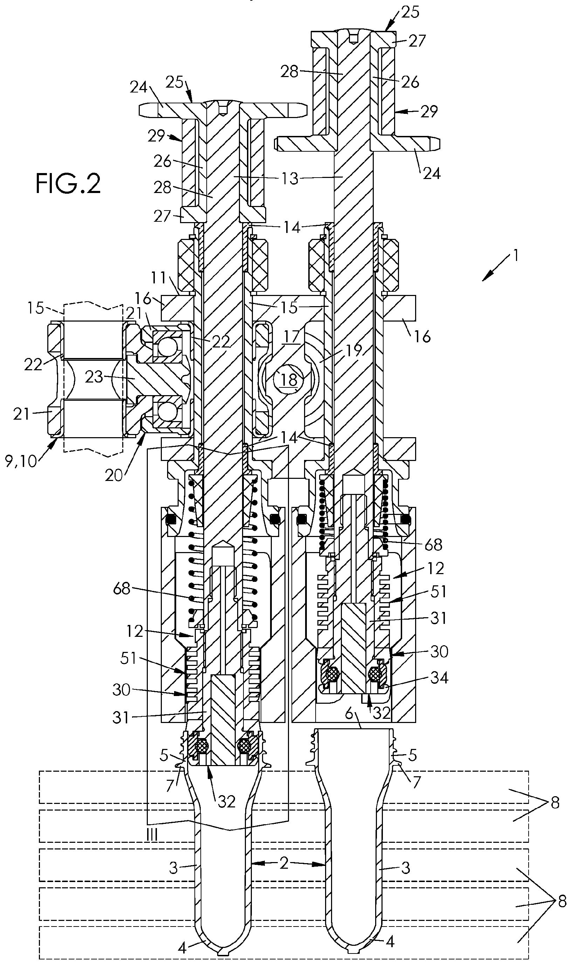

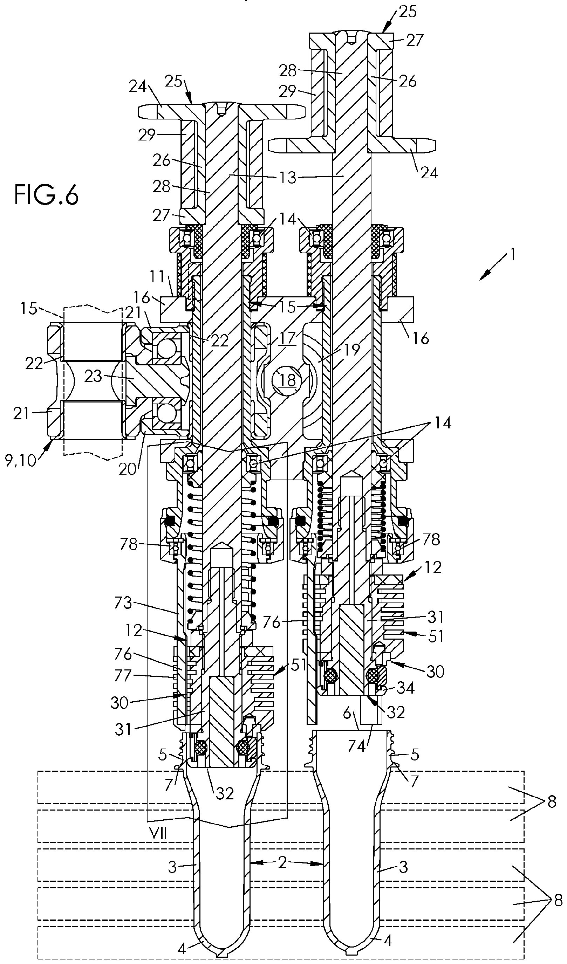

Sur les figures 2 et 6 est partiellement illustrée une unité **1** de chauffe de corps creux **2** en matière plastique. Dans l'exemple illustré, les corps creux **2** sont des préformes à partir de chacune desquelles est destiné à être formé un récipient (tel qu'une bouteille ou un flacon) par soufflage ou étirage soufflage. Dans la suite de la présente description et dans les revendications, la référence **2** sera indifféremment attachée aux termes "corps creux" ou "préforme(s)".

Chaque préforme **2** comprend un corps **3** de forme sensiblement cylindrique fermé par un fond **4** (ici de forme sensiblement hémisphérique) et un col **5** qui s'ouvre par un buvant **6** à une extrémité du corps **3** opposée au fond **4**. Le col **5**, qui présente déjà sur la préforme **2** sa forme finale, est séparé du corps **3** par une collerette **7** annulaire en saillie radiale.

Comme on le voit sur les figures 2 et 6, l'unité **1** de chauffe est équipée d'une pluralité de sources **8** de rayonnement infrarouge (par ex. des lampes halogène), et un convoyeur **9** agencé pour transporter les préformes **2** en exposant le corps **3** et le fond **4** au rayonnement des sources **8** de rayonnement pour les porter à une température de chauffe supérieure à la température de transition vitreuse de la matière. Dans le cas du polytéréphtalate d'éthylène (PET), dont la température de transition vitreuse est de 80°C environ, la température de chauffe est par exemple de 120°C environ.

Le convoyeur **9** comprend une chaîne **10** de transport intégrant une pluralité de maillons **11** interconnectés, et, pour chaque préforme **2**, un dispositif **12** de préhension de la préforme **2**, également appelé « tournette » et monté sur un maillon **11**. Dans les exemples illustrés sur les figures 2 et 6, chaque maillon **11** porte une paire de tournettes **12** identiques adjacentes.

Chaque tournette **12** comprend, en premier lieu, un arbre **13** monté en libre rotation, ainsi qu'en translation, par rapport au maillon **11**. Dans les exemples illustrés, l'arbre **13** est monté par l'intermédiaire d'une paire de paliers **14** (qui peuvent être des paliers lisses sous forme de coussinets réalisés dans un matériau à faible coefficient de friction, par ex. en bronze, comme illustré sur la figure 2 ou des roulements à billes, comme illustré sur la figure 6), dans un fourreau **15** solidaire du maillon **11**.

L'arbre **13** est de préférence réalisé en acier, pour des raisons de résistance mécanique et de résistance à l'usure.

Comme on le voit sur les figures 2 et 6, le maillon **11**, avantageusement réalisé en acier, comprend deux chapes **16** adossées, dans chacune desquelles est inséré verticalement un arbre **13**. Les chapes **16** sont séparées par une cloison **17** dans laquelle est emmanché un axe **18** portant un galet **19** roulant sur un rail de support et de guidage de la chaîne **10** de transport.

Comme on le voit également sur les figures 2 et 6, chaque maillon **11** est interconnecté au maillon **11** adjacent au moyen d'un attelage **20** comprenant une paire de douilles **21** montées chacune en rotation d'axe vertical sur un fourreau **15** (par l'intermédiaire de coussinets **22** à faible coefficient de friction) et montées l'une par rapport à l'autre en rotation d'axe horizontal par l'intermédiaire d'un arbre **23** qui se présente, dans l'exemple illustré, sous forme d'un rivet.

A une extrémité supérieure, la tournette **12** est pourvue d'un pignon **24** fixé sur l'arbre **13** et solidaire en rotation de celui-ci. Ce pignon **24** engrène une crémaillère fixe s'étendant le long de l'unité **1** de chauffe, pour entraîner l'arbre **13** (et, avec lui, l'ensemble de la tournette **12**) en rotation tandis que la chaîne **10** est entraînée en translation (au moyen, par exemple, d'une roue motrice) de façon à exposer tout le corps **3** et le fond **4** de la préforme **2** au rayonnement infrarouge des sources **8**. Dans l'exemple illustré sur les figures 2 et 6, le pignon **24** est intégré à une pièce **25** en forme de bobine qui comprend un fût **26** à une extrémité duquel s'étend le pignon **24** et, à l'opposé de celui-ci, un flasque **27** de diamètre inférieur au pignon **24**. La pièce **25** est fixée sur l'arbre **13** en étant par exemple montée sur une section **28** d'extrémité supérieure de celui-ci, de diamètre réduit, puis assujettie à l'arbre **13** par déformation de l'extrémité de celui-ci, à la manière d'un rivet.

La pièce **25** est destinée à coopérer par emboîtement avec une fourchette **29** d'un actionneur mobile en translation verticale pour déplacer la tournette **12** entre une position dite de vêtissage (à gauche sur les figures 2 et 6) dans laquelle la tournette **12** est, par une extrémité inférieure, emboîtée dans le col **5** d'une préforme **2** pour supporter celle-ci lors de sa chauffe, et une position dite de dévêtissage (à droite sur les figures 2 et 6) dans laquelle la tournette **12** est retirée de la préforme **2** pour permettre le transfert de celle-ci vers une unité de formage une fois la chauffe terminée.

La tournette **12** comprend, à cet effet, un mandrin **30** solidaire de l'arbre **13** et destiné à venir s'emboîter, en position de vêtissage, dans le col **5** d'une préforme **2**.

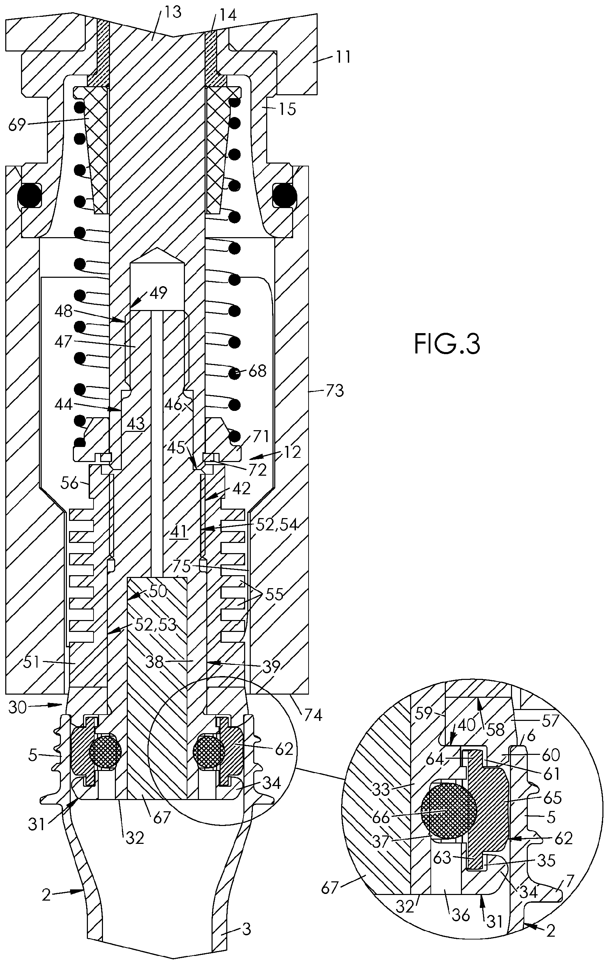

Ce mandrin **30** comprend, en premier lieu, un embout **31** solidaire de l'arbre **13**. Comme on le voit sur la figures 3 (et plus particulièrement dans le médaillon de détail), l'embout **31**, qui se présente sous forme d'une pièce monobloc en acier (pour des raisons de résistance mécanique), et plus précisément en acier inoxydable (inox), est étagé. Il comprend, du côté d'une face **32** d'extrémité libre opposée à l'arbre **13**, une section **33** inférieure qui, en position de vêtissage, est logée dans la préforme **2**.

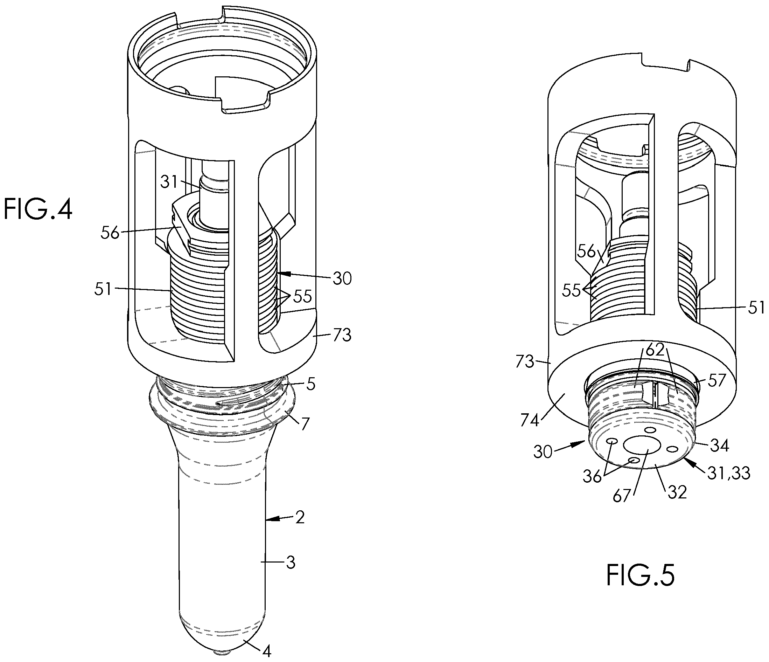

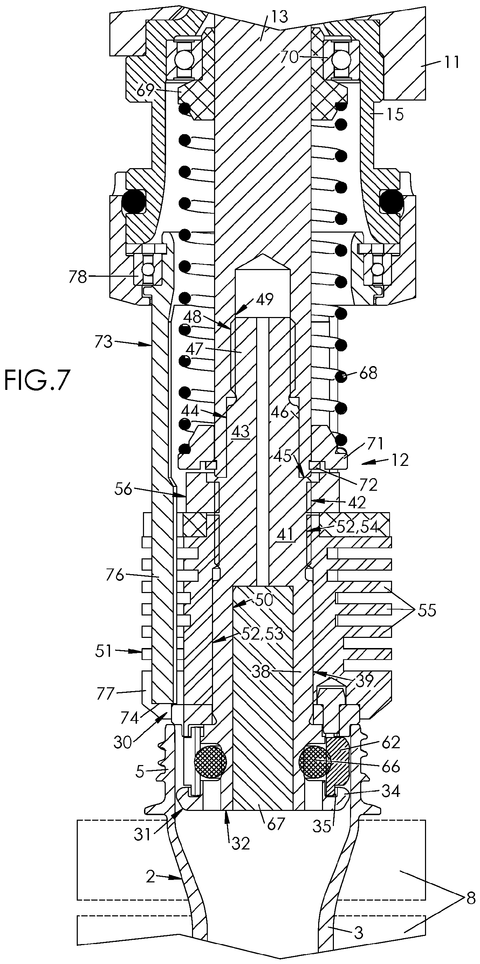

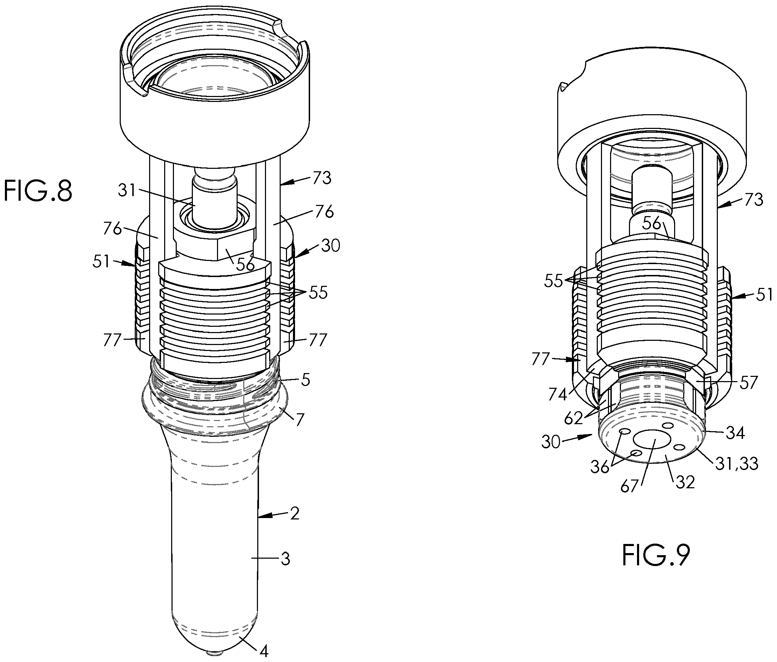

Au voisinage de la face **32** d'extrémité libre de l'embout **31**, la section **33** inférieure comprend une collerette **34** en saillie radiale, dans laquelle est creusée une rainure **35** annulaire dite inférieure. Comme illustré sur les figures 3 et 5 d'une part, et sur les figures 7 et 9 d'autre part, la section **33** inférieure de l'embout **31** est pourvue d'une empreinte **36** destinée à accueillir une clé de serrage. Dans les exemples illustrés, cette empreinte **36** se présente sous forme d'une série de trous (en l'occurrence au nombre de quatre) percés dans la face **32** d'extrémité libre de l'embout **31**.

La section **33** inférieure de l'embout **31** est par ailleurs pourvue d'une gorge **37** qui forme une restriction locale de diamètre de la section **33** inférieure.

L'embout **31** comprend une première section **38** intermédiaire qui surmonte la section **33** inférieure et présente une face **39** externe cylindrique lisse, de diamètre inférieur à la section **33** inférieure, dont la première section **38** intermédiaire est séparée par un épaulement **40** inférieur.

L'embout **31** comprend une deuxième section **41** intermédiaire qui surmonte la première section **38** intermédiaire et présente une face **42** externe filetée.

L'embout **31** comprend une troisième section **43** intermédiaire qui surmonte la deuxième section **41** intermédiaire et présente une face **44** externe cylindrique lisse, de diamètre inférieur à ceux de la première section **38** intermédiaire et de la deuxième section **41** intermédiaire. Cette troisième section **43** intermédiaire, séparée de la deuxième section **41** intermédiaire par un épaulement **45** supérieur, est emmanchée dans une section **46** inférieure cylindrique lisse formée dans l'arbre **13**.

L'embout **31** comprend, enfin, une section **47** supérieure ayant une face **48** externe cylindrique filetée. Cette section **47** supérieure coopère par vissage grâce à sa face **48** externe cylindrique filetée avec une section **49** supérieure taraudée formée dans l'arbre **13** et surmontant la section **46** inférieure lisse.

Comme illustré sur les figures **3** et **7**, un logement **50** est ménagé dans l'embout **31**, ce logement **50** débouchant sur la face **32** d'extrémité libre.

Le mandrin **30** comprend, en deuxième lieu, un radiateur **51**. Ce radiateur **51** se présente sous forme d'un manchon creux pourvu, d'une part, intérieurement, d'un alésage **52** central ayant une section **53** inférieure lisse et une section **54** supérieure taraudée et d'autre part, extérieurement, d'une série d'ailettes **55** ayant pour fonction de dissiper la chaleur absorbée par le radiateur **51**.

Le radiateur **51** est monté directement sur l'embout **31**. Plus précisément, la section **53** inférieure de l'alésage **52** est emmanchée sur la première section **38** intermédiaire, de manière à assurer un contact thermique intime de ces deux éléments. En outre, pour assurer une fixation durable du radiateur **51** sur l'embout **31**, la section **54** supérieure taraudée du radiateur **51** est vissée sur la deuxième section **41** intermédiaire de l'embout **31**. De préférence, ce vissage est avantageusement complété par un collage au moyen d'une colle conçue pour assurer le freinage des pièces filetées tout en étant capable de résister à la chaleur, par ex. une colle acrylique de type ester diméthacrylate. Une colle de ce type est notamment commercialisée par la société Loctite sous la dénomination Loctite 222 (marque déposée).

Comme on le voit notamment sur les figures 4 et 8, une extrémité **56** supérieure du radiateur **51** est conformée en écrou, sous forme dans les exemples illustrés d'une paire de méplats parallèles, apte à accueillir une clé plate pour assurer le vissage du radiateur **51** sur l'embout **31** tandis que celui-ci est fixé en rotation au moyen d'une clé à ergots coopérant avec l'empreinte **36** formée dans la face **32** d'extrémité libre de l'embout **31**.

Le mandrin **30** comprend, en troisième lieu, une entretoise **57** intercalée entre l'embout **31** et le radiateur **51**, en étant prise en sandwich entre une face **58** inférieure du radiateur **51** et l'épaulement **40** inférieur.

Cette entretoise **57** se présente sous forme d'une pièce annulaire pourvue d'un alésage **59** central par lequel elle est emmanchée sur la première section **38** intermédiaire de l'embout **31**. Comme on le voit sur les figures 3 et 7, l'entretoise **57** présente une lèvre **60** annulaire qui fait saillie en regard de la collerette **34** et qui, conjointement avec la partie de la section **33** inférieure de l'embout **31** située entre la gorge **37** et l'épaulement **40** inférieur, forme une rainure **61** annulaire dite supérieure, située axialement en regard de la rainure **35** inférieure.

Le mandrin **30** comprend, en quatrième lieu, une bague **62** expansible montée entre l'embout **31** et l'entretoise **57**. Cette bague **62** est avantageusement subdivisée en plusieurs secteurs dont l'écartement mutuel provoque une expansion radiale de la bague **62**. Comme illustré sur les figures 3 et 7, la bague **62** présente un bord **63** inférieur emboîté dans la rainure **35** inférieure, un bord **64** supérieur emboîté dans la rainure **61** annulaire supérieure, ainsi qu'un bourrelet **65** central qui, sous l'effet de l'expansion radiale de la bague **62**, assure, en position de vêtissage, le blocage de la préforme **2** par rapport au mandrin **30**, par frottement contre la paroi interne du col **5**.

Le mandrin **30** comprend, en cinquième lieu, un organe **66** élastique monté entre l'embout **31** et la bague **62** expansible. Dans les exemples illustrés sur les figures 3 et 7, cet organe **66** élastique se présente sous forme d'un joint torique monté dans la gorge **3**7 de la section **33** inférieure de l'embout **31**. Ce joint **66** est réalisé dans un élastomère, par ex. dans un caoutchouc naturel ou de synthèse, notamment en silicone ou en Viton (marque déposée désignant un fluoroélastomère commercialisé par la firme DuPont). La nature élastique de ce joint **66** provoque l'expansion radiale de la bague **62** pour assurer la préhension de la préforme **2** de la manière décrite ci-dessus, lorsqu'en position de vêtissage la section **33** inférieure de l'embout **31** est emboîtée dans le col **5**.

Le mandrin **30** comprend, en sixième lieu, un insert **67** réalisé dans un matériau à conductivité thermique élevée, enchâssé dans le logement **50**, c'est-à-dire que l'insert **67** est monté sans jeu dans le logement **50**, pour maximiser la surface de contact entre l'insert **67** et l'embout **31**. Dans le présent contexte, la conductivité thermique d'un matériau est dite élevée si elle est supérieure ou égale à 100 W.m⁻¹.K⁻¹.

Grâce à conductivité thermique élevée, l'insert **67** remplit une fonction de caloduc (c'est-à-dire de pont thermique) entre, d'une part, la section **33** inférieure de l'embout **31**, soumise à un échauffement dû à une exposition directe à une partie du rayonnement des sources **8** et à un transfert thermique de calories issues de la préforme **2**, tant par contact (via la collerette **34** et la bague **62** expansible) que par convection, et, d'autre part, le radiateur **51**.

Pour maximiser les échanges thermiques et l'évacuation des calories, et comme on le voit sur les figures 3 et 7, l'insert **67** s'étend jusqu'au droit du radiateur **51**. A cet effet, le logement **50** s'étend quant à lui jusqu'au droit de la première section **38** intermédiaire. Dans les exemples illustrés, le logement **50** (et donc l'insert **67**, qui occupe tout le logement **50**) s'étend jusqu'au voisinage de la jonction entre la première section **38** intermédiaire et la deuxième section **41** intermédiaire.

En l'absence d'un tel caloduc, la transmission de l'embout 31 au radiateur **51** de calories issues de la chauffe se ferait tout de même, mais de manière moins efficace, car la conductivité thermique de l'acier (matériau dans lequel est réalisé l'embout **31**) est relativement faible : cette conductivité thermique est en effet comprise, selon les aciers, entre 15 et 50 W.m⁻¹.K⁻¹. La présence et le positionnement de l'insert **67**, qui s'étend de la face **32** d'extrémité libre de l'embout **31** jusqu'au droit du radiateur **51**, accélère l'évacuation des calories, au bénéfice d'une régulation thermique efficace de l'embout **31**, et donc du mandrin **30**.

L'insert **67** est de préférence réalisé en aluminium (ce terme couvrant également les alliages d'aluminium). On peut utiliser un aluminium non allié, dont la conductivité thermique est comprise entre 200 et 240 W.m⁻¹.K⁻¹. L'aluminium pur présente, outre cette conductivité thermique élevée, l'avantage d'être particulièrement résistant à la corrosion (l'atmosphère de l'unité **1** de chauffe peut être humide en raison de la reprise en eau des préformes **2**). Cependant, il peut être avantageux d'utiliser un aluminium allié, dont les propriétés mécaniques (et en particulier la résistance) sont meilleures que celles de l'aluminium pur, et dont la conductivité thermique est à peine plus faible, voire comparable. Ainsi, l'insert **67** peut être réalisé dans un alliage 6060 (nomenclature AFNOR) ou AlMgSi0,5 (nomenclature DIN), qui possède une conductivité thermique de l'ordre de 200 W.m⁻¹.K⁻¹ et contient, en pourcentage massique, les éléments suivants :
Silicium (Si) entre 0,3 et 0,6 ;
Fer (Fe) entre 0,1 et 0,3
Cuivre (Cu) 0,1
Manganèse (Mn) 0,1
Magnésium (Mg) entre 0,35 et 0,6
Chrome (Cr) 0,05
Zinc (Zn) 0,15
Titane (Ti) 0,1
Aluminium : le solde

Selon un mode particulier de réalisation, l'insert 67 est cylindrique (c'est-à-dire qu'il se présente sous forme d'un barreau), et le logement **50** se présente, de manière correspondante, sous forme d'un alésage.

L'insert **67** est de préférence monté serré dans le logement **50**. Ce montage serré est avantageusement réalisé à froid, la dilatation thermique de l'aluminium (allié ou non), supérieure à celle de l'acier, renforçant le serrage de l'insert **67** dans son logement lors de la chauffe.

Il est avantageux de maximiser le diamètre de l'insert **67** par rapport au diamètre externe de la première section **38** intermédiaire (c'est-à-dire par rapport au diamètre interne de la section **53** inférieure de l'alésage **52**). Aussi l'insert **67** présente-t-il de préférence un diamètre externe supérieur ou égal à 50% du diamètre externe de la première section **38** intermédiaire de l'embout **31**.

L'emprise radiale de l'insert **67** ne doit cependant pas être telle qu'elle nuise à la résistance mécanique de l'embout **31** (et donc du mandrin **30**). Il a été déterminé qu'un diamètre externe de l'insert **67** d'environ 60% du diamètre externe de la première section **38** intermédiaire de l'embout **31** constitue un bon compromis, optimisant la conduction de la chaleur tout en préservant la résistance mécanique de l'embout **31**.

Le fait que l'insert **67** s'étende jusqu'au droit du radiateur **51** favorise la rapidité des échanges thermiques entre eux.

Pour faciliter l'évacuation de la chaleur par le radiateur **51**, celui-ci est avantageusement réalisé dans un matériau à conductivité thermique élevée, par exemple en aluminium.

La tournette **12** comprend par ailleurs un organe **68** de rappel du mandrin **30** vers la position de vêtissage. Cet organe **68** de rappel se présente, dans les exemples illustrés sur les figures 3 et 7, sous forme d'un ressort de compression monté sur l'arbre **13** en étant intercalé entre le fourreau **15** (via une bague **69** supérieure, qui peut elle-même être en appui contre un palier **70**) et une extrémité inférieure de l'arbre **13** (via une bague **71** inférieure, qui peut être en appui contre un circlips **72** monté sur l'arbre **13**).

La tournette **12** comprend en outre un éjecteur **73** creux, monté sur le fourreau **15** en étant fixe en translation axiale (c'est-à-dire verticale) par rapport à celui-ci. L'éjecteur **73** présente une face **74** d'extrémité inférieure qui, en position de dévêtissage du mandrin, vient se plaquer contre le buvant **6** de la préforme **2** pour bloquer celle-ci lors du retrait du mandrin **30** du col **5**.

Selon un premier mode de réalisation illustré sur les figures 2 à 5, l'éjecteur **73** est également fixe en rotation par rapport au fourreau **15**, en étant emboîté sur une extrémité inférieure de celui-ci. Comme on le voit sur les figures 4 et 5, l'éjecteur **73** est ajouré pour permettre l'évacuation des calories par les ailettes **55** du radiateur **51**. Dans ce premier mode de réalisation, le radiateur **51** est complètement logé dans un alésage **75** ménagé dans l'éjecteur **73**.

Selon un deuxième mode de réalisation illustré sur les figures 6 à 9, le diamètre externe du radiateur **51** est supérieur à celui de l'éjecteur **73**, qui comprend une série de doigts **76** s'étendant axialement dans des échancrures **77** respectives formées dans le radiateur **51**. Dans ce deuxième mode de réalisation, l'éjecteur **73** est solidaire en rotation du mandrin **30** (tout en étant libre en translation par rapport à celui-ci), et donc libre en rotation par rapport au fourreau **15**, sur lequel l'éjecteur **73** est monté par l'intermédiaire d'un palier **78** (dans l'exemple illustré sur la figure 7, ce palier **78** est un roulement à billes).

Pour procéder à l'assemblage du mandrin **30**, on procède comme suit.

On commence par introduire le joint **66** torique dans la gorge **37**. On monte ensuite la bague **62** expansible (c'est-à-dire les trois secteurs qui la constituent) autour du joint **66** torique, en l'occurrence en introduisant le bord **63** inférieur dans la rainure **35** inférieure.

On emmanche ensuite l'entretoise **57** sur la première section **38** intermédiaire de l'embout **31**, en venant l'appliquer contre l'épaulement **40** inférieur. Dans cette position, le bord **64** supérieur de la bague **62** expansible vient se loger dans la rainure **61** annulaire supérieure. De la sorte, la bague **62** se trouve immobilisée en translation entre la collerette **34** de l'embout **31** et l'entretoise **57**, tout en bénéficiant d'un jeu radial lui permettant, sous l'effet de rappel du joint **66**, de se dilater pour s'appliquer, en position de vêtissage, contre la paroi interne du col **5**.

L'étape suivante consiste à monter le radiateur **51** sur l'embout **31**, en emmanchant la section **53** inférieure lisse du radiateur **51** sur la première section **38** intermédiaire de l'embout **31**, tout en vissant la section **54** supérieure taraudée du radiateur **51** sur la deuxième section **41** intermédiaire filetée de l'embout **31**. Le blocage en rotation de l'embout **31** est réalisé au moyen d'une clé à ergots coopérant avec l'empreinte **36** formée dans la face **32** d'extrémité libre de l'embout **31**, tandis que le vissage du radiateur **51** est réalisé au moyen d'une clé plate coopérant avec l'écrou formé à l'extrémité **56** supérieure du radiateur **51**. La colle destinée à assurer l'irréversibilité de la fixation du radiateur **51** sur l'embout **31** peut être appliquée au pinceau sur la section **54** taraudée avant qu'il soit procédé au vissage.

L'embout **31** est ensuite fixé sur l'arbre **13**, la troisième section **43** intermédiaire étant insérée dans la section **46** inférieure lisse formée dans l'arbre **13**, tandis que la section **47** supérieure de l'embout **31** est vissée dans la section **49** supérieure taraudée formée dans l'arbre **13**, jusqu'à ce que l'épaulement **45** supérieur vienne buter contre l'extrémité de l'arbre **13**. Pour immobiliser l'arbre **13** pendant le vissage de l'embout **31** au moyen de la clé pourvu d'ergots introduits dans l'empreinte **36**, l'arbre **13** est de préférence pourvu d'une paire de méplats opposés, aptes à coopérer avec une clé plate.

Le passage de la position de vêtissage à la position de dévêtissage (et, le cas échéant, inversement) est commandé la fourchette **29** emboîtée sur le fût **26** de la pièce **25**, entre le pignon **24** et le flasque **27**.

En position de dévêtissage, la section **33** inférieure de l'embout **31** est logée dans l'éjecteur **73** en étant située axialement en retrait par rapport à la face **32** d'extrémité de celui-ci, de sorte à permettre le déboîtement de la préforme **2**.

En position de vêtissage, vers laquelle le mandrin **30** est sollicité en permanence par le ressort constituant l'organe **68** de rappel, la section **33** inférieure de l'embout **31** est, avec la bague **62** et la lèvre **60** de l'entretoise **57**, emboîtée dans le col **5** d'une préforme **2**, qui lui est ainsi solidarisée (de manière réversible) à la fois en translation et en rotation.

Les avantages, en matière thermique, procurés par l'architecture du mandrin **30** ont déjà été expliqués. De fait, il a été constaté que la température de fonctionnement du mandrin **30** peut être maintenue à un niveau inférieur à 60°C, voire même inférieur à 50°C, et notamment à 45°C environ.

Il en résulte une meilleure régulation thermique des tournettes **12**, grâce à une meilleure évacuation des calories accumulées par le mandrin **30** lors de la chauffe de la préforme **2**, au bénéfice de la fiabilité de l'unité **1** de chauffe dans son ensemble.

## Revendications

1. Dispositif (**12**) de préhension de corps creux (**2**), qui comprend :
- un arbre (**13**) libre en rotation ;
- un mandrin (**30**) solidaire de l'arbre (**13**), ce mandrin (**30**) comprenant :
∘ un embout (**31**),
∘ un radiateur (**51**),
∘ une entretoise (**57**) intercalée entre l'embout (**31**) et le radiateur (**51**),
∘ une bague (**62**) expansible montée entre l'embout (**31**) et l'entretoise (**57**),
∘ un organe (**66**) élastique monté entre l'embout (**31**) et la bague (**62**) expansible,
ce dispositif (**12**) étant **caractérisé en ce que** :
- le radiateur (**51**) est monté directement sur l'embout (**31**),
- le mandrin (**30**) comprend un insert (**67**) réalisé dans un matériau à conductivité thermique élevée, enchâssé dans un logement (**50**) ménagé dans l'embout (**31**) et débouchant sur une face (**32**) d'extrémité libre de celui-ci, l'insert (**67**) s'étendant jusqu'au droit du radiateur (**51**).

2. Dispositif (**12**) selon la revendication 1, **caractérisé en ce que** l'insert (**67**) est en aluminium.

3. Dispositif (**12**) selon la revendication 1 ou la revendication 2, **caractérisé en ce que** l'insert (**67**) est cylindrique, et le logement (**50**) se présente sous forme d'un alésage.

4. Dispositif (**12**) selon l'une des revendications précédentes, **caractérisé en ce que** l'insert (**67**) est monté serré dans le logement.

5. Dispositif (**12**) selon l'une des revendications précédentes, **caractérisé en ce que** le radiateur (**51**) présente une section (**54**) taraudée par laquelle il est vissé sur une section (**41**) intermédiaire filetée correspondante de l'embout (**31**).

6. Dispositif (**12**) selon l'une des revendications précédentes, **caractérisé en ce que** le radiateur (**51**) présente une section (**53**) cylindrique lisse, par laquelle il est emmanché sur une section (**38**) cylindrique lisse correspondante de l'embout (**31**).

7. Dispositif (**12**) selon la revendication 6, **caractérisé en ce que** l'insert (**67**) présente un diamètre externe supérieur ou égal à 50% du diamètre externe de la section (**38**) cylindrique lisse de l'embout (**31**).

8. Dispositif (**12**) selon la revendication 7, **caractérisé en ce que** le diamètre externe de l'insert (**67**) est d'environ **60**% du diamètre externe de la section (**38**) cylindrique lisse de l'embout (**31**).

9. Dispositif (**12**) selon l'une des revendications précédentes, **caractérisé en ce que** l'embout (**31**) présente une section (**47**) d'extrémité filetée par laquelle il est vissé dans une section (**49**) taraudée correspondante de l'arbre (**13**).

10. Unité (**1**) de chauffe de corps creux, qui comprend une pluralité de dispositifs (**12**) de préhension selon l'une des revendications précédentes.

## Patentansprüche

1. Greifvorrichtung (12) für Hohlkörper (2), welche umfasst:
- eine sich drehende freie Welle (13);
- eine Spindel (30), die mit der Welle (13) fest verbunden ist, wobei die Spindel (30) umfasst:
• einen Ansatz (31),
• einen Radiator (51),
• einen Steg (57), der zwischen dem Ansatz (31) und dem Radiator (51) angeordnet ist,
• einen expandierbaren Ring (62), der zwischen dem Ansatz (31) und dem Steg (57) montiert ist,
• ein elastisches Element (66), das zwischen dem Ansatz (31) und dem expandierbaren Ring (62) montiert ist,
wobei diese Vorrichtung (12) **dadurch gekennzeichnet ist, dass**:
- der Radiator (51) direkt an dem Ansatz (31) montiert ist,
- die Spindel (30) einen Einsatz (67) umfasst, der aus einem Material mit erhöhter Wärmeleitfähigkeit gebildet ist und in einer Aufnahme (50) eingefasst ist, die in dem Ansatz (31) angeordnet ist und auf eine Fläche (32) des freien Endes von diesem mündet, wobei sich der Einsatz (67) bis auf die gleiche Ebene des Radiators (51) erstreckt.

2. Vorrichtung (12) nach Anspruch 1,
**dadurch gekennzeichnet, dass** der Einsatz (67) aus Aluminium besteht.

3. Vorrichtung (12) nach Anspruch 1 oder Anspruch 2, **dadurch gekennzeichnet, dass** der Einsatz (67) zylindrisch ist, und die Aufnahme (50) in der Form einer Bohrung gebildet ist.

4. Vorrichtung (12) nach einem der vorhergehenden Ansprüche,
**dadurch gekennzeichnet, dass** der Einsatz (67) in der Aufnahme gepasst montiert ist.

5. Vorrichtung (12) nach einem der vorhergehenden Ansprüche,
**dadurch gekennzeichnet, dass** der Radiator (51) einen Gewindeabschnitt (54) aufweist, durch den er auf einen entsprechenden Zwischengewindeabschnitt (41) des Ansatzes (31) geschraubt ist.

6. Vorrichtung (12) nach einem der vorhergehenden Ansprüche,
**dadurch gekennzeichnet, dass** der Radiator (51) einen glatten zylindrischen Abschnitt (53) aufweist, durch den er auf einen entsprechenden glatten zylindrischen Abschnitt (38) des Ansatzes (31) gepasst ist.

7. Vorrichtung (12) nach Anspruch 6,
**dadurch gekennzeichnet, dass** der Einsatz (67) einen Außendurchmesser größer oder gleich 50 % des Außendurchmessers des glatten zylindrischen Abschnitts (38) des Ansatzes (31) aufweist.

8. Vorrichtung (12) nach Anspruch 7,
**dadurch gekennzeichnet, dass** der Außendurchmesser des Einsatzes (67) ungefähr 60 % des Außendurchmessers des glatten zylindrischen Abschnitts (38) des Ansatzes (31) beträgt.

9. Vorrichtung (12) nach einem der vorhergehenden Ansprüche,
**dadurch gekennzeichnet, dass** der Ansatz (31) einen Gewindeendabschnitt (47) aufweist, durch den er in einen entsprechenden Gewindeabschnitt (49) der Welle (13) geschraubt ist.

10. Heizeinheit (1) für Hohlkörper, welche eine Vielzahl von Greifvorrichtungen (12) nach einem der vorhergehenden Ansprüche umfasst.

## Claims

1. Device (**12**) for gripping hollow bodies (**2**), which comprises:
- a freely rotating shaft (**13**);
- a mandrel (**30**) secured to the shaft (**13**), this mandrel (**30**) comprising:
∘ an end piece (**31**),
∘ a heatsink (**51**),
∘ a spacer (**57**) inserted between the end piece (**31**) and the heatsink (**51**),
∘ an expandable ring (**62**) mounted between the end piece (**31**) and the spacer (**57**),
∘ an elastic member (**66**) mounted between the end piece (**31**) and the expandable ring (**62**),
this device (**12**) being **characterized in that**
- the heatsink (**51**) is mounted directly on the end piece (**31**),
- the mandrel (**30**) comprises an insert (**67**) produced in a material with high thermal conductivity, driven into a recess (**50**) formed in the end piece (**31**) and emerging on a free end face (**32**) thereof, the insert (**67**) extending just to the level of the heatsink (**51**).

2. Device (**12**) according to Claim 1, **characterized in that** the insert (**67**) is made of aluminium.

3. Device (**12**) according to Claim 1 or Claim 2, **characterized in that** the insert (**67**) is cylindrical, and the recess (**50**) takes the form of a bore.

4. Device (**12**) according to one of the preceding claims, **characterized in that** the insert (**67**) is tightly mounted in the recess.

5. Device (**12**) according to one of the preceding claims, **characterized in that** the heatsink (**51**) has a tapped section (**54**) by which it is screwed onto a corresponding threaded intermediate section (**41**) of the end piece (**31**).

6. Device (**12**) according to one of the preceding claims, **characterized in that** the heatsink (**51**) has a smooth cylindrical section (**53**), by which it is fitted onto a corresponding smooth cylindrical section (**38**) of the end piece (**31**).

7. Device (**12**) according to Claim 6, **characterized in that** the insert (**67**) has an outer diameter greater than or equal to 50% of the outer diameter of the smooth cylindrical section (**38**) of the end piece (**31**).

8. Device (**12**) according to Claim 7, **characterized in that** the outer diameter of the insert **(67)** is approximately **60**% of the outer diameter of the smooth cylindrical section (**38**) of the end piece (**31**).

9. Device (**12**) according to one of the preceding claims, **characterized in that** the end piece (**31**) has a threaded end section (**47**) by which it is screwed into a corresponding tapped section (**49**) of the shaft (**13**).

10. Hollow body heating unit (**1**), which comprises a plurality of gripping devices (**12**) according to one of the preceding claims.
